# FASCICULE DE BREVET EUROPEEN

(11) **EP 0 558 414 B1**
(45) Date de publication et mention de la délivrance du brevet: **01.05.1996**
(21) Numéro de dépôt: 93400482.1
(22) Date de dépôt: 25.02.1993
(51) Int. Cl.: B60S 1/34

(54) **Dispositif d'essuie-glace**
Scheibenwischeranlage
Windshield wiper mechanism

(30) Priorité: 28.02.1992 FR 9202337
(43) Date de publication de la demande: 01.09.1993
(73) Titulaire: PAUL JOURNEE S.A., F-92700 Colombes (FR)
(72) Inventeur: Journée, Maurice, F-60240 Reilly (FR); Jehannet, Jean-Pierre, F-27200 Vernon (FR)
(74) Mandataire: Lemaire, Marc

(56) Documents cités:
- DE-A- 1 938 618
- DE-A- 4 032 655
- GB-A- 2 180 442
- PATENT ABSTRACTS OF JAPAN vol. 10, no. 315 (M-529)(2371) 25 Octobre 1986 & JP-A-61 125 952 (NISSAN MOTOR) 13 Juin 1986

## Description

La présente invention concerne un dispositif d'essuie-glace, notamment de véhicule automobile.

L'invention concerne plus particulièrement un dispositif d'essuie-glace du type comportant au moins un balai d'essuyage, par exemple par l'intermédiaire d'un porte-balai à étriers et qui est monté articulé, autour d'un axe d'articulation, sur une tête d'entraînement de l'essuie-glace qui est soumise à un mouvement de rotation alternatif par un arbre d'essuyage et qui permet d'obtenir un balayage de la vitre à essuyer.

Le bras d'essuie-glace porte, par l'intermédiaire du porte-balai, un balai d'essuyage articulé qui est apte à essuyer la surface vitrée telle que par exemple un pare-brise de véhicule automobile.

Afin d'obtenir un essuyage correct de la surface vitrée, il est nécessaire que la lame d'essuyage de l'essuie-glace soit appliquée sur la surface vitrée à essuyer avec une force de pression, ou force d'essuyage, importante.

A cet effet, il est généralement prévu au moins un ressort, tel que par exemple un ressort hélicoïdal de traction, qui est disposé entre la tête d'entraînement et le reste du bras d'essuie-glace et qui applique en fait un couple nominal d'essuyage sensiblement constant au bras d'essuie-glace, autour de son axe d'articulation, de manière à venir plaquer la lame d'essuyage contre la vitre.

Du fait de la conception de ce dispositif, la lame est appuyée pendant le mouvement de balayage de la surface vitrée, mais également en position de repos du dispositif d'essuie-glace.

Du fait de la permanence de l'effort nominal d'essuyage qui est appliqué à la lame lorsque le dispositif d'essuie-glace est au repos, on constate que la lame conserve une déformation résiduelle résultant de l'écrasement de son profil contre la surface vitrée, la lame ne procurant plus alors un essuyage suffisamment efficace de la surface vitrée.

Il est donc souhaitable de pouvoir réduire l'effort nominal d'essuyage appliqué à la lame lorsque l'essuie-glace est au repos.

Par ailleurs, la qualité d'essuyage de la surface vitrée dépend en fonctionnement de la maîtrise de l'effort d'essuyage qui est appliqué à la lame, et ceci notamment en fonction de la vitesse de déplacement du véhicule et en fonction de la fréquence du mouvement de balayage de l'essuie-glace.

Il est connu d'augmenter la force d'essuyage au moyen d'appendices aérodynamiques montés sur le bras d'essuie-glace, mais ces dispositifs ne permettent pas de maîtriser avec précision la valeur de la force d'essuyage et ne permettent notamment pas de la faire varier de manière contrôlée en fonction d'un paramètre de fonctionnement du véhicule.

Afin de remédier aux inconvénients qui viennent d'être mentionnés, il a déjà été proposé un dispositif d'essuie-glace du type mentionné précédemment dans lequel les moyens agencés entre la tête d'entraînement et le bras d'essuie-glace pour appliquer à ce dernier un couple d'essuyage comportent au moins un ressort qui applique au bras d'essuie-glace un couple nominal d'essuyage sensiblement constant, et un dispositif pour appliquer au bras d'essuie-glace un couple complémentaire dont la valeur algébrique est réglable de manière à pouvoir augmenter ou réduire la valeur du couple d'essuyage en fonction notamment d'un paramètre de fonctionnement du véhicule.

Le dispositif d'application du couple complémentaire comporte par exemple un actionneur associé à la tête d'entraînement et une tige de sortie de l'actionneur reliée au bras d'essuie-glace.

Bien qu'une telle conception donne satisfaction, on constate que l'ensemble du dispositif est soumis à des efforts cycliques qui résultent notamment de la forme galbée du pare-brise qui, lors du fonctionnement de l'essuie-glace, provoque un pivotement cyclique de faible amplitude du bras d'essuie-glace autour de son axe d'articulation. Ces oscillations du bras d'essuie-glace se traduisent en effet alors par des contraintes cycliques appliquées à l'actionneur et notamment au moyen de fixation du corps de l'actionneur sur la tête d'entraînement.

Afin de remédier à cet inconvénient, l'invention propose un dispositif d'essuie-glace du type mentionné précédemment, tel que défini dans le préambule de la revendication 1 dans lequel l'organe de sortie de l'actionneur est relié au bras d'essuie-glace par une pièce de liaison comportant une surface active, ladite surface coopèrant avec un organe de transmission du couple complémentaire relié au bras d'essuie-glace conformément aux enseignements du document GB-A-2 180 442, caractérisé en ce que l'organe est susceptible de se déplacer par rapport au bras d'essuie-glace à l'encontre d'un effort élastique de tarage pour faire varier de manière contrôlée la valeur de la force d'essuyage de l'essuie-glace en fonction d'un paramètre de fonctionnement du véhicule et amortir les contraintes cycliques lorsque des sollicitations cycliques exercent sur l'organe un couple supérieur à celui correspondant à l'effort élastique de tarage.

Selon divers modes de réalisation de l'invention :
- l'organe de transmission du couple complémentaire est monté pivotant sur le bras d'essuie-glace autour d'un axe de pivotement parallèle à l'axe d'articulation du bras d'essuie-glace et il comporte un organe élastique de tarage qui sollicite l'organe de transmission du couple en rotation autour de son axe de pivotement ;
- l'organe de transmission du couple complémentaire comporte une branche d'application du couple qui s'étend selon une direction sensiblement perpendiculaire à l'axe de pivotement et dont l'extrémité libre coopère avec la surface active de la pièce de liaison ;
- la pièce de liaison se déplace selon une direction perpendiculaire à l'axe d'articulation et la surface active est une portion de surface plane perpendiculaire à la direction de déplacement ;
- l'extrémité libre du bras d'application du couple comporte un galet monté tournant autour d'un axe de rotation parallèle à l'axe d'articulation ;
- l'organe élastique de tarage est un ressort hélicoïdal de compression dont une première extrémité sollicite la branche d'application du couple et dont la seconde extrémité coopère avec une surface d'appui formée dans le bras d'essuie-glace ;
- le ressort hélicoïdal est monté dans un trou longitudinal borgne de la branche d'application du couple ;
- un piston coaxial au ressort hélicoïdal est monté coulissant dans le trou longitudinal de la branche d'application du couple, la tête du piston coopérant avec la surface d'appui ;
- la branche d'application du couple comporte un bras articulé à l'une de ses extrémités sur la branche d'application du couple, autour d'un axe de pivotement parallèle à l'axe de pivotement de l'organe de transmission du couple, le bras portant le ressort hélicoïdal de compression ;
- le bras est une tige qui traverse le ressort hélicoïdal et sur laquelle est monté coulissant un piston dont la tête est sollicitée par la seconde extrémité du ressort hélicoïdal et coopère avec la surface d'appui au moyen d'une articulation du type à rotule ;
- l'organe élastique de tarage sollicite élastiquement l'organe de transmission du couple en butée contre une surface d'appui formée dans le bras d'essuie-glace ;
- la surface d'appui est constituée par la face interne du dos d'une portion du bras d'essuie-glace présentant une section transversale en forme de U ;
- la tête du piston comporte un galet monté tournant autour d'un axe de rotation perpendiculaire à l'axe de coulissement du piston ;
- la pièce de liaison comporte une seconde surface active qui coopère avec l'organe de transmission du couple pour appliquer au bras d'essuie-glace un couple complémentaire de sens opposé à celui résultant de la coopération de la première surface active avec l'organe de transmission du couple ;
- l'organe de transmission du couple comporte une seconde branche d'application du couple qui s'étend selon une direction sensiblement perpendiculaire à l'axe de pivotement et dont l'extrémité libre coopère avec la seconde surface active de la pièce de liaison ;
- les deux branches d'application du couple sont parallèles et s'étendent de part et d'autre de l'axe de pivotement selon une direction sensiblement perpendiculaire à la direction de déplacement de la pièce de liaison ;
- la seconde surface active est une rampe inclinée ;
- la rampe est susceptible de pivoter, à l'encontre d'un effort élastique de tarage, autour d'un axe parallèle à l'axe d'articulation et perpendiculaire à la ligne de pente de la rampe ;
- la rampe est constituée par l'une des branches d'un ressort à lame en forme d'épingle à cheveux dont l'autre branche prend appui contre une surface d'appui de la pièce de liaison et dont le coude est traversé par une broche ;
- la seconde branche d'application du couple comporte une rampe inclinée qui coopère avec ladite seconde surface active ;
- la ligne de pente de la rampe est parallèle à la direction de déplacement de la pièce de liaison ;
- la seconde surface active coopère avec la rampe inclinée avec interposition d'un second organe élastique de tarage ;
- le second organe élastique de tarage est un ressort hélicoïdal de compression dont une première extrémité prend appui dans le fond d'un alésage borgne de la pièce de liaison qui s'étend perpendiculairement à la direction de déplacement de la pièce de liaison, et dont l'extrémité libre coopère avec la rampe inclinée ;
- un piston coaxial au ressort hélicoïdal est monté coulissant dans l'alésage borgne, la tête du piston coopérant avec la rampe ;
- les valeurs des efforts élastiques de tarage sont réglables ;
- le dispositif applique au bras d'essuie-glace un couple complémentaire de manière à pouvoir augmenter ou réduire la valeur du couple d'essuyage en fonction notamment d'au moins un paramètre de fonctionnement du véhicule.

D'autres caractéristiques et avantages de l'invention apparaîtront à la lecture de la description détaillée qui va suivre pour la compréhension de laquelle on se reportera aux dessins annexés dans lesquels :
- La figure 1 est une vue de dessus avec arrachement partiel d'un dispositif d'essuie-glace réalisé conformément aux enseignements de l'invention ;
- la figure 2 est une vue schématique en coupe transversale partielle, à plus grande échelle, du dispositif d'essuie-glace qui est illustré partiellement à la figure 1 ;
- les figures 3 et 4 sont des vues schématiques partielles, similaires à celle de la figure 2, qui illustrent différentes positions relatives des composants de l'essuie-glace correspondant notamment à différentes phases de fonctionnement de celui-ci ;
- la figure 5 est une vue de détail illustrant une variante de réalisation du dispositif d'essuie-glace illustré à la figure 2 ;
- les figures 6 et 7 sont des vues de détail à plus grande échelle, similaires à celle de la figure 2, qui illustrent différentes positions relatives des composants du dispositif de l'essuie-glace correspondant à d'autres phases de fonctionnement de celui-ci ;
- les figures 8 à 13 illustrent différentes positions relatives des composants d'un mode de réalisation préféré du dispositif d'essuie-glace selon l'invention ; et
- les figures 14 et 15 sont des vues similaires à celles des figures 9 et 11 et illustrent une variante de réalisation du mode de réalisation illustré aux figures 8 à 13.

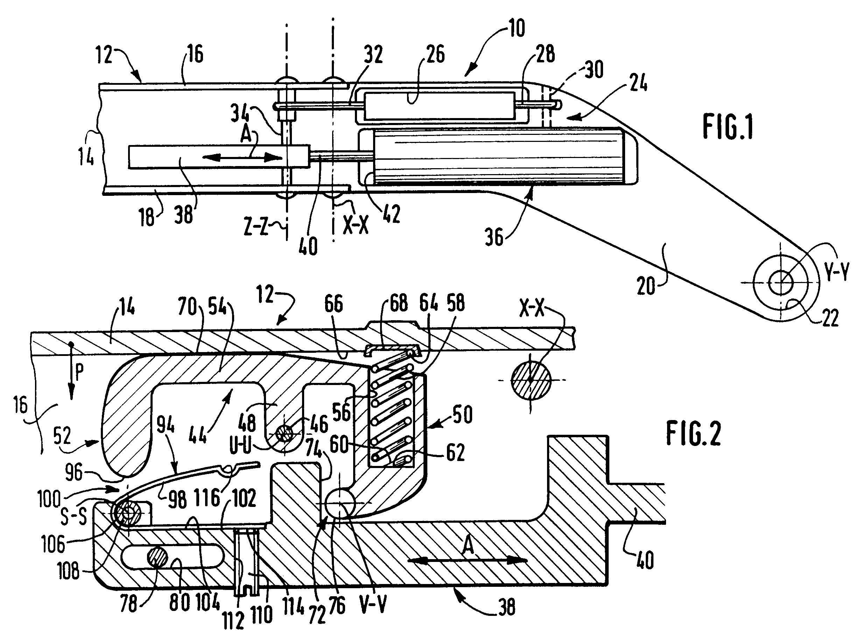

Le dispositif d'essuie-glace 10 illustré aux figures 1 et 2 comporte un bras d'essuie-glace 12 formant porte-balai dont la portion illustrée sur les figures se présente sous la forme d'un profilé creux en U inversé constitué par un dos 14 et par deux flans ou joues latérales perpendiculaires 16 et 18.

Le bras d'essuie-glace 12 est articulé sur une tête d'entraînement 20 autour d'un axe géométrique X-X qui s'étend selon une direction perpendiculaire à la direction longitudinale générale du bras d'essuie-glace 12.

La tête d'entraînement 20 comporte, à son extrémité opposée à l'axe d'articulation X-X, un alésage 22 d'axe Y-Y sensiblement perpendiculaire à l'axe d'articulation et qui est prévu pour recevoir un arbre d'essuyage (non représenté) qui permet d'entraîner en rotation la tête d'entraînement 20 en un mouvement alternatif par tout moyen tel qu'un moteur d'essuyage (non représenté).

Selon une technique connue, le dispositif d'essuie-glace 10 comporte des moyens 24 qui permettent d'appliquer au bras 12 un effort ou pression d'essuyage P de valeur sensiblement constante et orienté en direction de la surface à essuyer (non représentée).

Le dispositif 24 est ici constitué par un ressort hélicoïdal de traction 26 dont une extrémité 28 est accrochée sur une tige transversale 30 de la tête d'entraînement 20 et dont l'autre extrémité 32 est accrochée sur une tige transversale 34 du bras d'essuie-glace.

L'axe Z-Z de la tige 34 est situé en-dessous de l'axe X-X, c'est-à-dire entre ce dernier et la surface à essuyer de manière que le ressort 26 applique un couple nominal au balai 12 autour de son axe d'articulation X-X dont il résulte une pression d'essuyage P appliquée à la lame d'essuyage.

Le dispositif d'essuie-glace 10 comporte également des moyens pour appliquer au bras d'essuie-glace 12 un couple complémentaire qui permet de faire varier la valeur de la pression d'essuyage P.

Ces moyens sont pour l'essentiel constitués par un actionneur 36 agencé dans la tête d'entraînement 20 et par une pièce de liaison 38, schématisée à la figure 1, qui relie la tige de sortie 40 de l'actionneur 36 au bras d'essuie-glace 12.

Dans le mode de réalisation illustré à la figure 1, l'actionneur 36 est du type linéaire et sa direction générale d'actionnement A est perpendiculaire à l'axe d'articulation X-X du bras 12 sur la tête d'entraînement 20.

La tige 40 de l'actionneur 36 fait saillie parallèlement à la direction A, à l'extérieur du corps 42 de l'actionneur 36.

Comme cela est illustré à la figure 2, la pièce de liaison 38 coopère avec un organe 44 de transmission du couple complémentaire au bras d'essuie-glace 12.

L'organe 44 est réalisé sous la forme d'un basculeur qui est monté pivotant par rapport au bras d'essuie-glace 12 au moyen d'un axe de pivotement 46 dont l'axe géométrique de rotation U-U est parallèle à l'axe d'articulation X-X.

L'organe 44 est monté pivotant sur l'axe 46 au moyen de sa branche centrale 48 qui est reliée à une première branche d'application du couple 50 et à une seconde branche d'application du couple 52.

Les branches 50 et 52 s'étendent sensiblement parallèlement entre elles et selon une direction sensiblement perpendiculaire à la direction A de déplacement de la pièce de liaison 38.

Les deux branches d'application du couple sont reliées à la branche centrale 48 par une branche de liaison 54 qui s'étend selon une direction sensiblement parallèle au dos 14 du bras d'essuie-glace 12.

Un trou longitudinal borgne 56 est formé dans la première branche d'application du couple 50 et il reçoit un ressort hélicoïdal de compression 58 dont une première extrémité 60 prend appui contre le fond 62 du trou borgne 56 et dont l'extrémité opposée 64 sollicite la face interne 66 du dos 14 du bras d'essuie-glace 12 avec interposition d'une coupelle d'appui 68.

Le ressort 58 est un ressort hélicoïdal de compression qui sollicite le basculeur 44 en rotation autour de son axe U-U dans le sens horaire en considérant la figure 2.

Dans sa position neutre illustrée à la figure 2, le basculeur 44 de transmission du couple est sollicité, par le ressort 58, en butée contre la face interne 66 du dos 14 contre laquelle prend appui la face supérieure 70 de la portion de la branche de liaison 54 qui relie les branches 48 et 52.

L'extrémité libre 72 de la première branche d'application du couple 50 est agencée en vis-à-vis d'une première surface active 74 de la pièce de liaison 38.

La surface active 74 est une portion de surface plane qui s'étend dans un plan perpendiculaire à la direction A de déplacement de la pièce de liaison 38.

L'extrémité libre 72 peut par exemple être équipée d'un galet 76 qui est monté tournant autour d'un axe de rotation V-V parallèle à l'axe de pivotement U-U.

La pièce de liaison 38 est guidée dans ses déplacements selon la direction A par un doigt de guidage 78 relié à la tête d'entraînement 20 qui est reçu dans une lumière longitudinale de guidage 80 de la pièce 38.

La coopération de l'extrémité libre 72 de la première branche 50 avec la première surface active 74 a pour but de permettre d'appliquer au bras d'essuie-glace 12 un couple complémentaire qui accroît la pression d'essuyage P.

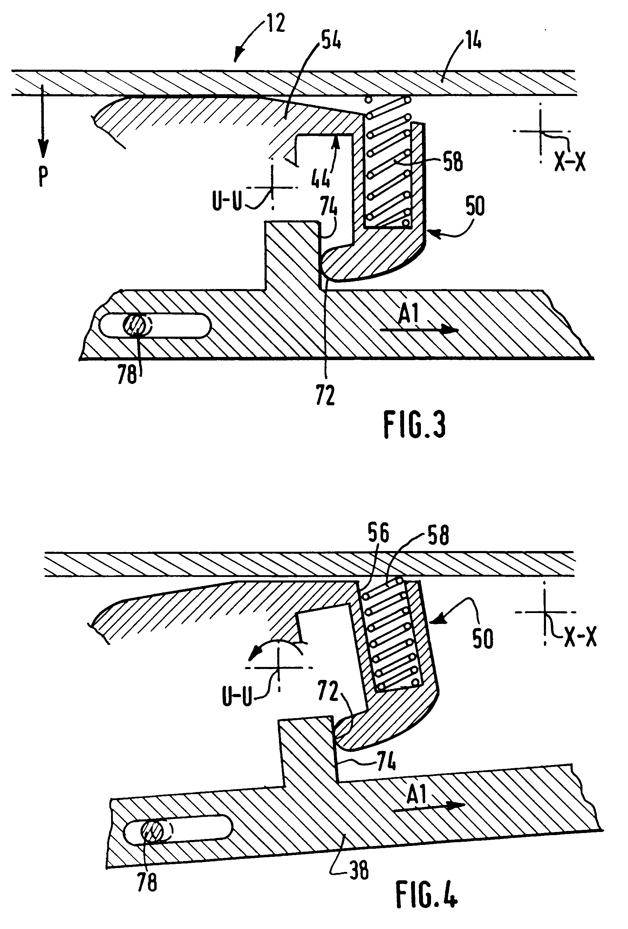

A cet effet, l'actionneur 36 provoque le déplacement de la pièce de liaison 38 dans le sens A1 comme cela est indiqué à la figure 3 pour amener la surface active 74 en contact avec l'extrémité libre 72.

Lorsque la surface active 74 sollicite l'extrémité libre 72 de la branche 50, elle applique au basculeur de transmission du couple 44 un couple d'actionnement qui tend à le faire pivoter autour de l'axe U-U dans le sens anti-horaire en considérant la figure 3.

Le ressort de tarage 58 est choisi de manière que sa constante élastique applique au basculeur 44 un couple résistant d'une valeur prédéterminée qui le sollicite, dans le sens horaire en considérant la figure 3, autour de l'axe U-U.

La valeur de la constante élastique du ressort 58 est donc choisie de manière que le couple résistant soit légèrement supérieur au couple-moteur qui est appliqué au basculeur 44 par la surface de liaison 74 et qu'ainsi, la pièce de liaison 38 permette d'appliquer un couple complémentaire au bras d'essuie-glace 12 qui augmente la pression d'essuyage P.

De ce fait, l'action de la surface active 74 sur l'extrémité libre 72 du bras 50 assure la transmission au bras d'essuie-glace 12 d'un couple complémentaire autour de l'axe X-X qui augmente la pression d'essuyage P.

Lors du mouvement de balayage de l'essuie-glace, des sollicitations angulaires cycliques du bras 12 autour de l'axe X-X, qui résultent de la forme galbée du pare-brise , se traduisent par des mouvements cycliques de l'extrémité libre 72 par rapport à la surface active 74.

Du fait que la branche d'application de couple 50 s'étend entre les axes d'articulation X-X et la surface active 74, ces sollicitations cycliques auraient pour inconvénient de transmettre des sollicitations cycliques à l'actionneur 36 par l'intermédiaire de la pièce de liaison 38.

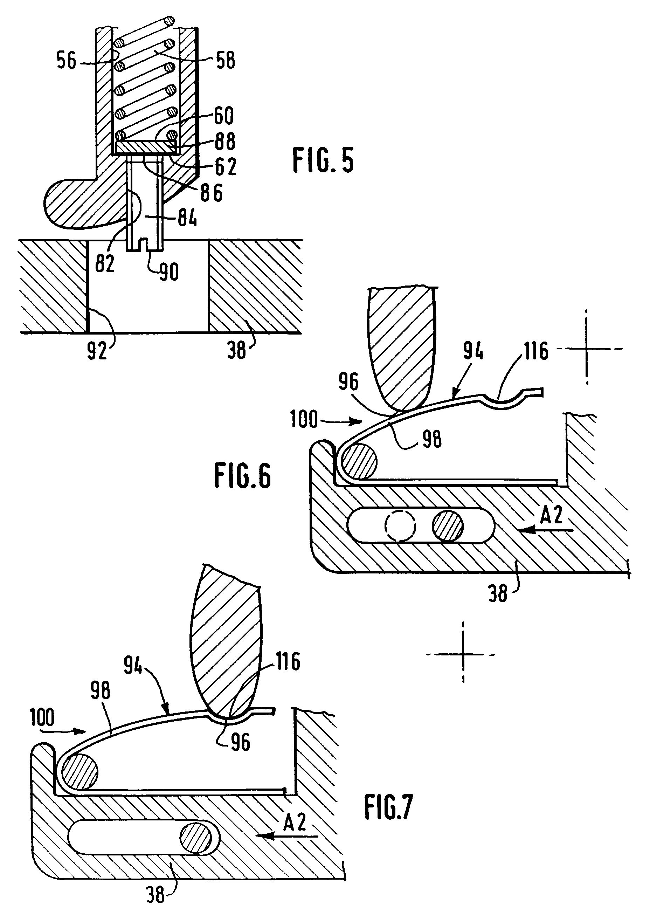

Mais, du fait de la présence du ressort de tarage 58, tout déplacement du bras d'essuie-glace 12 autour de l'axe X-X, qui se traduit normalement par une augmentation du couple complémentaire dépassant la valeur résultant du choix de la valeur de tarage du ressort 58, se traduit par un pivotement du basculeur 44 autour de son axe U-U dans le sens anti-horaire en considérant la figure 2 et comme cela est illustré à la figure 4.

A cet effet, le ressort de tarage 58 est comprimé à l'intérieur du trou borgne 56 et le point de contact entre la surface de l'extrémité 72 et la première surface active 74 se déplace vers le haut en considérant les figures 3 et 4.

Dans la variante de réalisation illustrée à la figure 5, on a représenté des moyens pour régler la valeur de tarage du ressort 58.

A cet effet, le fond 62 du trou borgne 56 est percé d'un trou taraudé 82 qui reçoit une vis de réglage 84 dont la face d'extrémité 86 agit sur la première extrémité 60 du ressort 58 par l'intermédiaire d'un disque d'appui 88.

Afin de pouvoir accéder à la tête d'entraînement 90 de la vis 84, il est prévu un évidement 92 dans la pièce de liaison 38.

La pièce de liaison 38 comporte une seconde surface active 94, agencée au voisinage de son extrémité libre, qui est prévue pour coopérer avec l'extrémité libre 96 de la seconde branche 52 d'application du couple.

La seconde surface active 94 est une rampe inclinée par rapport à la direction A de déplacement de la pièce 38.

Dans le mode de réalisation illustré aux figures 2,6 et 7, la rampe 94 est constituée par une première branche 98 d'un ressort à lame 100 en forme d'épingle à cheveux.

La seconde branche 102 du ressort 100 prend appui contre une portion de surface plane 104 de la pièce de liaison.

Le coude 106 qui relie entre elles les branches 98 et 102 est traversé par une broche 108 qui permet un pivotement du ressort 100 autour de l'axe S-S de la broche 108.

La coopération de la broche 108 avec la face interne du coude 106 définit le point de pivotement, par déformation élastique, de la rampe 94, 98.

Une vis de réglage 110 est montée vissée dans un trou taraudé 112 de la pièce de liaison de manière que sa face d'extrémité 114 puisse coopérer avec la face en vis-à-vis de la seconde branche 102 du ressort 100 pour régler la position angulaire du ressort 100 autour de l'axe S-S et modifier ainsi l'inclinaison de la rampe 94.

La surface active constituée par la rampe 94 comporte un cran 116 au voisinage de l'extrémité libre de la branche 98 du ressort 100.

La coopération de la seconde surface active 94 avec l'extrémité libre 96 de la seconde branche 52 d'application du couple a pour but d'appliquer au bras 12 un couple complémentaire opposé à celui qui lui est appliqué par le ressort 26 afin de réduire la pression d'essuyage P.

A cet effet, l'actionneur 36 provoque le déplacement de la pièce de liaison 38 dans le sens A2 (voir figures 6 et 7) jusqu'à ce que l'extrémité libre 96 coopère avec la rampe 94.

Cette coopération a pour effet d'appliquer au bras 12 un couple qui le sollicite en rotation autour de son axe d'articulation X-X, dans le sens horaire en considérant les figures,.

Le cran 116 formé dans la rampe 94 détermine la position de parking du bras d'essuie-glace 12 dans laquelle, l'extrémité libre 96 est reçue dans le cran 116 et applique au bras 12 un couple de soulagement maximal.

Le fait de réaliser la seconde surface active 94 sous la forme d'une branche 98 du ressort 100 permet de constituer un ressort de tarage de la valeur du couple complémentaire dont la valeur peut être réglée au moyen de la vis 110.

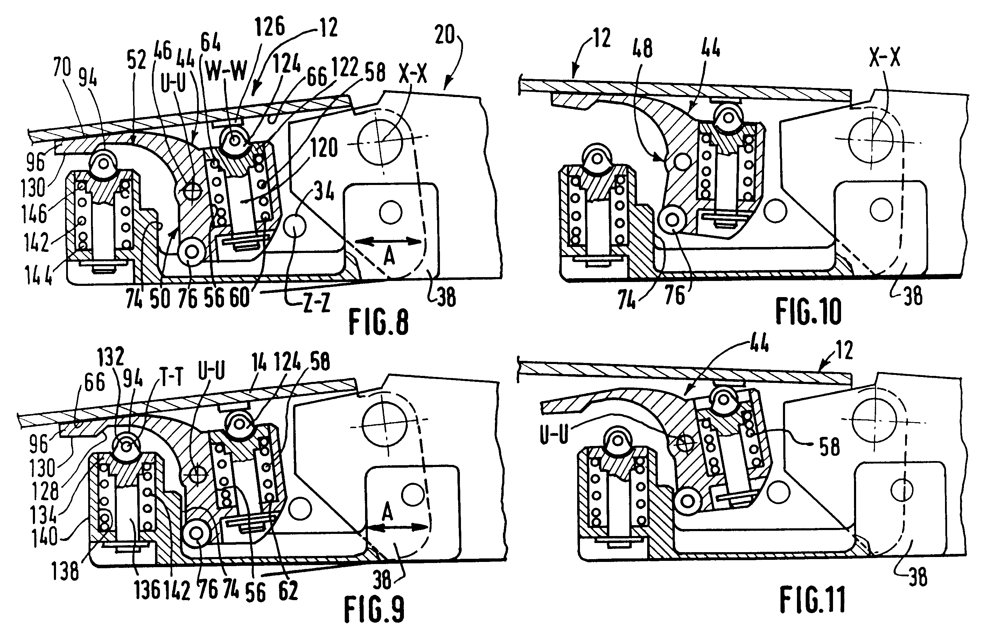

Dans le mode de réalisation préféré de l'invention illustré aux figures 8 à 13, les éléments identiques ou équivalents à ceux qui ont été décrit en référence aux figures 1 à 7 sont désignés par les mêmes chiffres de référence.

Comme on peut le constater sur les figures, le ressort de tarage 58 s'étend axialement dans le trou borgne 56 autour de la tige 120 d'un piston monté coulissant dans le trou 56 et dont la tête de piston 122 reçoit un galet 124 qui est monté tournant autour d'un axe W-W parallèle à l'axe de pivotement U-U et perpendiculaire à l'axe du piston.

Le galet tournant 124 coopère avec une pastille d'appui 126 formée sur la face interne 66 du dos 14 du bras 12.

L'extrémité libre 96 de la seconde branche 52 d'application du couple comporte une rampe inclinée 128 qui se prolonge par une contre-rampe 130.

La seconde surface active de la pièce de liaison 38 est ici constituée par la surface cylindrique externe 94 d'un galet 132 qui est monté tournant autour d'un axe de rotation T-T perpendiculaire à la direction A de déplacement de la pièce de liaison 38.

Le galet 132 est monté dans la tête 134 d'un piston dont la tige 136 s'étend coaxialement à l'intérieur d'un alésage borgne 138 formé dans la pièce de liaison 38, au voisinage de l'extrémité libre 140 de cette dernière.

Un ressort hélicoïdal de compression 142 est monté dans l'alésage borgne 138.

Sa première extrémité 144 prend appui dans le fond de l'alésage tandis que sa seconde extrémité 146 sollicite le piston 134 et le galet 132 axialement vers le haut en considérant les figures.

Le dispositif est illustré à la figure 8 dans sa position neutre correspondant à la figure 2.

Lorsque l'on désire appliquer un couple complémentaire qui augmente la pression d'essuyage, la pièce de liaison 38 est entraînée par l'actionneur 36 vers la droite en considérant la figure 8 jusqu'à aboutir à la position illustrée à la figure 9 dans laquelle le galet 76 coopère avec la première surface active 74.

Les figures 10 et 11 sont des vues similaires à celles des figures 8 et 9 correspondant à un site différent de l'essuie-glace par rapport au pare-brise, c'est-à-dire à une position dans laquelle le galbe du pare-brise est différent.

A la figure 10, le dispositif à basculeur 44 est toujours dans sa position neutre et l'on constate que le bras d'essuie-glace 12 a pivoté légèrement autour de son axe d'articulation X-X dans le sens horaire en considérant les figures.

Le galet 76 du basculeur reste éloigné de la surface active 74 de la pièce de liaison 38.

A la figure 11, qui correspond à l'application d'un couple complémentaire au bras 12 par la pièce de liaison 38, on constate que, comme dans le cas de la figure 4, le basculeur 44 a pivoté autour de son axe U-U, dans le sens anti-horaire en considérant les figures, à l'encontre de la force de tarage qui lui était appliquée par le ressort 58.

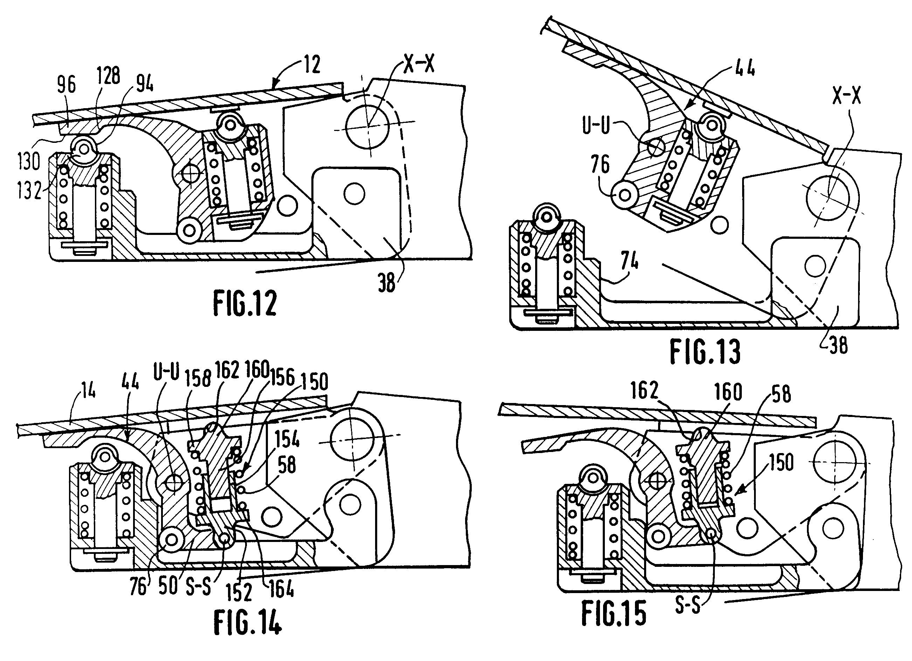

La figure 12 illustre la position dite de parking dans laquelle l'actionneur 36 a provoqué le déplacement de la pièce de liaison 38 vers la gauche en considérant les figures, la seconde surface active 94 constituée par le galet 132 ayant, par coopération avec les portions de rampes 128 et 130, provoqué un pivotement du bras d'essuie-glace 12 autour de son axe d'articulation X-X dans le sens horaire en considérant les figures de manière à provoquer un soulagement, c'est-à-dire une réduction de la pression d'essuyage P.

Le dispositif est illustré à la figure 13 dans sa position dite d'intervention dans laquelle l'utilisateur a provoqué le pivotement complet du bras d'essuie-glace 12 et du basculeur 44 qui lui est lié, autour de l'axe X-X afin par exemple de procéder au remplacement de la lame d'essuyage.

On a représenté aux figures 14 et 15 une variante de réalisation du mode de réalisation illustré aux figures 9 et 11.

Selon cette variante, la branche 50 d'application du couple au basculeur 44 est équipée d'un bras 150 dont une extrémité 152 est articulée sur la branche 50 autour d'un axe de pivotement S-S.

Le bras 150 est réalisé sous la forme d'une tige cylindrique creuse 154 à l'intérieur de laquelle est montée coulissante la tige 156 d'un piston dont la tête 158 comporte un bossage sphérique 160 qui est reçu dans un logement complémentaire 162 formé dans la face interne du dos 14 du bras d'essuie-glace 12.

Le ressort hélicoïdal de tarage 58 est interposé entre un épaulement radial d'appui 164 du bras 150 et la tête 158 du piston.

Le fonctionnement de cette variante de réalisation illustrée aux figures 14 et 15 est identique à celui du dispositif illustré aux figures 9 et 11.

Il est à noter que les ressorts de tarage n'ont pour seule fonction que de déterminer d'une part des valeurs limites du couple complémentaire appliqué au moyen de l'actionneur 36 et d'autre part d'assurer le rappel du basculeur 44 dans sa position neutre, mais qu'ils n'exercent aucune fonction d'application d'un couple complémentaire sur le bras 12.

## Revendications

1. Dispositif d'essuie-glace (10), notamment de véhicule automobile, du type comportant un bras d'essuie-glace (12) qui porte au moins un balai d'essuyage et qui est monté articulé autour d'un axe d'articulation (X-X), sur une tête d'entraînement (20) du bras d'essuie-glace (12), et des moyens (24, 36) agencés entre la tête d'entraînement (20) et le bras d'essuie-glace (12) pour appliquer à ce dernier un couple d'essuyage et qui comportent au moins un ressort (26) qui applique au bras d'essuie-glace (12) un couple nominal d'essuyage sensiblement constant et un dispositif d'application d'un couple complémentaire comportant un actionneur (36) dont le corps (42) est associé à la tête d'entraînement (20) et dont l'organe de sortie (40) est relié au bras d'essuie-glace (12) par une pièce de liaison (38) comportant une surface active (74), ladite surface active (74) coopérant avec un organe (44) de transmission du couple complémentaire relié au bras d'essuie-glace (12), caractérisé en ce que l'organe (44) est susceptible de se déplacer par rapport au bras d'essuie-glace à l'encontre d'un effort élastique de tarage (58) pour faire varier de manière contrôlée la valeur de la force d'essuyage de l'essuie-glace (10) en fonction d'un paramètre de fonctionnement du véhicule et amortir les contraintes cycliques lorsque des sollicitations cycliques exercent sur l'organe (44) un couple supérieur à celui correspondant à l'effort élastique de tarage (58).

2. Dispositif d'essuie-glace selon la revendication 1, caractérisé en ce que l'organe de transmission du couple complémentaire (44) est monté pivotant sur le bras d'essuie-glace (12) autour d'un axe de pivotement (U-U) parallèle à l'axe d'articulation (X-X), et en ce qu'il comporte un organe élastique de tarage (58) qui sollicite l'organe (44) de transmission du couple complémentaire en rotation autour de son axe de pivotement (U-U).

3. Dispositif d'essuie-glace selon la revendication 2, caractérisé en ce que l'organe (44) de transmission du couple comporte une branche (50) d'application du couple qui s'étend selon une direction sensiblement perpendiculaire à l'axe de pivotement (U-U) et dont l'extrémité libre (72) coopère avec la surface active (74) de la pièce de liaison (38).

4. Dispositif d'essuie-glace selon la revendication 3, caractérisé en ce que la pièce de liaison (38) se déplace selon une direction (A) perpendiculaire à l'axe d'articulation (X-X) et en ce que la surface active (74) est une portion de surface plane perpendiculaire à la direction de déplacement (A).

5. Dispositif d'essuie-glace selon la revendication 4, caractérisé en ce que l'extrémité libre (72) de la branche (50) d'application du couple comporte un galet (76) monté tournant autour d'un axe de rotation (V-V) parallèle à l'axe d'articulation (X-X).

6. Dispositif d'essuie-glace selon l'une des revendications 4 ou 5, caractérisé en ce que l'organe élastique de tarage (58) est un ressort hélicoïdal de compression dont une première extrémité sollicite la branche (50) d'application du couple et dont la seconde extrémité (64) coopère avec une surface d'appui formée dans le bras d'essuie-glace (12).

7. Dispositif d'essuie-glace selon la revendication 6, caractérisé en ce que le ressort hélicoïdal est monté dans un trou longitudinal borgne (56) de la branche (50) d'application du couple.

8. Dispositif d'essuie-glace selon la revendication 7, caractérisé en ce qu'un piston coaxial au ressort hélicoïdal (58) est monté coulissant dans le trou longitudinal (56) de la branche d'application du couple (50), et en ce que la tête (122) du piston coopère avec ladite surface d'appui.

9. Dispositif d'essuie-glace selon la revendication 6, caractérisé en ce que la branche (50) d'application du couple comporte un bras (150) articulé à l'une de ses extrémités (152) sur la branche d'application du couple, autour d'un axe (S-S) de pivotement parallèle à l'axe (U-U) de pivotement de l'organe (44) de transmission du couple, et en ce que le bras (150) porte le ressort hélicoïdal de compression (58).

10. Dispositif d'essuie-glace selon la revendication 9, caractérisé en ce que le bras (150) est une tige (154) qui traverse le ressort hélicoïdal (58) et sur laquelle est monté coulissant un piston (156) dont la tête (160) est sollicitée par la seconde extrémité du ressort (58) et coopère avec ladite surface d'appui au moyen d'une articulation du type à rotule (160, 162).

11. Dispositif d'essuie-glace selon l'une quelconque des revendications 6 à 10, caractérisé en ce que l'organe élastique de tarage (58) sollicite élastiquement l'organe (44) de transmission du couple en butée contre une surface d'appui (66) formée dans le bras d'essuie-glace (12).

12. Dispositif selon la revendication 11, caractérisé en ce que la surface d'appui (66) est constituée par la face interne du dos (14) d'une portion du bras d'essuie-glace (12) présentant une section transversale en forme de U.

13. Dispositif d'essuie-glace selon la revendication 8, caractérisé en ce que la tête (122) du piston comporte un galet (124) monté tournant autour d'un axe de rotation (W-W) perpendiculaire à l'axe de coulissement du piston.

14. Dispositif d'essuie-glace selon l'une des revendications précédentes, caractérisé en ce que la pièce de liaison (38) comporte une seconde surface active (94) qui coopère avec l'organe (44) de transmission du couple pour appliquer au bras d'essuie-glace (12) un couple complémentaire de sens opposé à celui résultant de la coopération de la première surface active (74) avec l'organe (44) de transmission du couple.

15. Dispositif d'essuie-glace selon la revendication 14 prise en combinaison avec l'une quelconque des revendications 3 à 13, caractérisé en ce que l'organe de transmission du couple comporte une seconde branche (52) d'application du couple qui s'étend selon une direction sensiblement perpendiculaire à l'axe de pivotement (U-U) et dont l'extrémité libre (96) coopère avec la seconde surface active (94) de la pièce de liaison (38).

16. Dispositif d'essuie-glace selon la revendication 15 prise en combinaison avec l'une quelconque des revendications 4 à 13, caractérisé en ce que les deux branches (50, 52) d'application du couple sont parallèles et s'étendent de part et d'autre de l'axe de pivotement (U-U), selon une direction sensiblement perpendiculaire à la direction (A) de déplacement de la pièce de liaison (38).

17. Dispositif d'essuie-glace selon l'une quelconque des revendications 14 à 16, caractérisé en ce que la seconde surface active (94) est une rampe inclinée.

18. Dispositif d'essuie-glace selon la revendication 17, caractérisé en ce que la rampe (94) est susceptible de pivoter à l'encontre d'un effort élastique de tarage autour d'un axe (S-S) parallèle à l'axe d'articulation (X-X) et perpendiculaire à la ligne de pente de la rampe.

19. Dispositif d'essuie-glace selon la revendication 18, caractérisé en ce que la rampe (94) est constituée par l'une (98) des branches (98, 102) d'un ressort à lame en forme d'épingle à cheveux (100) dont l'autre branche (102) prend appui contre une surface d'appui (112) de la pièce de liaison (38) et dont le coude (106) est traversé par une broche (108).

20. Dispositif d'essuie-glace selon la revendication 15, caractérisé en ce que la seconde branche (52) d'application du couple comporte une rampe inclinée (128, 130) qui coopère avec ladite seconde surface active (94).

21. Dispositif selon la revendication 20, prise en combinaison avec l'une quelconque des revendications 4 à 13, caractérisé en ce que la ligne de pente de ladite rampe est parallèle à ladite direction (A) de déplacement de la pièce de liaison (38).

22. Dispositif selon l'une des revendications 20 ou 21, caractérisé en ce que la seconde surface active (94) coopère avec la rampe inclinée (128, 130) avec interposition d'un second organe élastique de tarage (142).

23. Dispositif d'essuie-glace selon la revendication 22, caractérisé en ce que le second organe élastique de tarage est un ressort hélicoïdal de compression (142) dont une première extrémité (144) prend appui dans le fond d'un alésage borgne (138) de la pièce de liaison (38) qui s'étend perpendiculairement à la direction de déplacement (A) de cette dernière et dont l'extrémité libre coopère avec la rampe inclinée (128, 130).

24. Dispositif d'essuie-glace selon la revendication 23, caractérisé en ce qu'un piston (136) coaxial au ressort hélicoidal (142) est monté coulissant dans ledit alésage longitudinal (138) de la pièce de liaison (38), et en ce que la tête (134) du piston (136) coopère avec la rampe inclinée (128, 130).

25. Dispositif d'essuie-glace selon l'une quelconque des revendications précédentes, caractérisé en ce que la valeur élastique de tarage est réglable.

26. Dispositif d'essuie-glace selon l'une quelconque des revendications précédentes, caractérisé en ce que ledit dispositif (36) applique au bras d'essuie-glace (12) un couple complémentaire de manière à pouvoir augmenter ou réduire la valeur du couple d'essuyage en fonction notamment d'au moins un paramètre de fonctionnement du véhicule.

## Claims

1. A screen wiping apparatus (10), especially for a motor vehicle, of the type comprising a screen wiper arm (12) which carries at least one wiper blade, and which is articulated about a pivot axis (X-X) on a driving head (20) of the wiper arm (12), and means (24, 36) which are arranged between the driving head (20) and the wiper arm (12) for applying a wiping torque to the latter, and which comprise at least one spring (26) which applies a substantially constant nominal wiping torque to the wiper arm (12), together with a complementary torque applying device comprising an actuator (36), the body (42) of which is associated with the driving head (20), and the output member (40) of which is connected to the wiper arm (12) by a connecting member (38) having a working surface (74), the said working surface cooperating with a complementary torque transmitting member (44) coupled to the wiper arm (12), characterised in that the member (44) is arranged so as to be displaced with respect to the wiper arm against a resilient loading force (58), so as to cause the value of the wiping force of the screen wiper (10) to vary in a controlled manner as a function of an operating parameter of the vehicle, and to damp out cyclic stresses when cyclic applied forces exert on the member (44) a torque greater than that which corresponds to the resilient loading force (58).

2. Screen wiping apparatus according to Claim 1, characterised in that the complementary torque transmitting member (44) is mounted on the wiper arm (12) for pivoting movement about a pivot axis (U-U) which is parallel to the pivot axis (X-X), and in that it includes an elastic loading member (58) which urges the complementary torque transmitting member (44) in rotation about its pivot axis (U-U).

3. Screen wiping apparatus according to Claim 2, characterised in that the torque transmitting member (44) includes a torque applying branch (50) which extends in a direction substantially at right angles to the pivot axis (U-U), and the free end (72) of which cooperates with the working surface (74) of the connecting member (38).

4. Screen wiping apparatus according to Claim 3, characterised in that the connecting member (38) is displaced in a direction (A) at right angles to the pivot axis (X-X), and in that the working surface (74) is a flat surface portion at right angles to the direction (A) of displacement.

5. Screen wiping apparatus according to Claim 4, characterised in that the free end (72) of the said torque applying branch (50) includes a roller (76) mounted for rotation about an axis of rotation (V-V) parallel to the pivot axis (X-X).

6. Screen wiping apparatus according to Claim 4 or Claim 5, characterised in that the elastic loading member (58) is a helical compression spring, a first end of which exerts a biasing force on the torque applying branch (50), with its second end (64) cooperating with an engagement surface defined in the wiper arm (12).

7. Screen wiping apparatus according to Claim 6, characterised in that the helical spring is mounted in a longitudinal blind hole (56) of the torque applying branch (50).

8. Screen wiping apparatus according to Claim 7, characterised in that a piston, coaxial with the helical spring (58), is mounted for sliding movement in the longitudinal hole (56) of the torque applying branch (50), and in that the head (122) of the piston cooperates with the said engagement surface.

9. Screen wiping apparatus according to Claim 6, characterised in that the torque applying branch (50) includes an arm (150) which is articulated, at one of its ends (152), on the torque applying branch about a pivot axis (S-S) parallel to the pivot axis (U-U) of the torque transmitting member (44), and in that the arm (150) carries the helical compression spring (58).

10. Screen wiping apparatus according to Claim 9, characterised in that the arm (150) is a spigot (154) which extends through the helical spring (58), and on which there is mounted, for sliding movement thereon, a piston (156), the head (160) of which is biased by the second end of the spring (58) and cooperates with the said engagement surface through a spherical type articulation (160, 162).

11. Screen wiping apparatus according to any one of Claims 6 to 10, characterised in that the elastic loading member (58) biases the torque transmitting member (44) elastically into abutment against an engagement surface (66) defined in the wiper arm (12).

12. Screen wiping apparatus according to Claim 11, characterised in that the engagement surface (66) comprises the inner face of the spine portion (14) of a portion of the wiper arm (12), which has a U-shaped transverse cross section.

13. Screen wiping apparatus according to Claim 8, characterised in that the head (122) of the piston includes a roller (124) which is rotatably mounted about an axis of rotation (W-W) at right angles to the axis of sliding movement of the piston.

14. Screen wiping apparatus according to any one of the preceding Claims, characterised in that the said connecting member (38) includes a second working surface (94) which cooperates with the torque transmitting member (44), so as to apply to the wiper arm (12) a complementary torque in a direction opposed to the direction which results from cooperation of the said first working surface (74) with the torque transmitting member (44).

15. Screen wiping apparatus according to Claim 14 taken in combination with any one of Claims 3 to 13, characterised in that the torque transmitting member includes a second torque applying branch (52) which extends in a direction substantially at right angles to the pivot axis (U-U), and of which the free end (96) cooperates with the second working surface (94) of the connecting member (38).

16. Screen wiping apparatus according to Claim 15 taken in combination with any one of Claims 4 to 13, characterised in that the two torque applying branches (50, 52) are parallel to each other and extend on either side of the pivot axis (U-U), in a direction which is substantially at right angles to the direction (A) of displacement of the connecting member (38).

17. Screen wiping apparatus according to any one of Claims 14 to 16, characterised in that the second working surface (94) is an inclined ramp.

18. Screen wiping apparatus according to Claim 17, characterised in that the ramp (94) is adapted to pivot against an elastic loading force about an axis (S-S), which is parallel to the pivot axis (X-X) and at right angles to the line of slope of the ramp.

19. Screen wiping apparatus according to Claim 18, characterized in that the ramp (94) is defined by one (98) of the branches (98, 102) of a leaf spring (100) in the form of a hairpin, the other branch (102) of which bears against an engagement surface (112) of the connecting member (38), with a pin (108) passing through the bend (106) of the hairpin spring.

20. Screen wiping apparatus according to Claim 15, characterised in that the second torque applying branch (52) includes an inclined ramp (128, 130) which cooperates with the said second working surface (94).

21. Screen wiping apparatus according to Claim 20 taken in combination with any one of Claims 4 to 13, characterised in that the line of slope of the said ramp is parallel to the said direction (A) of displacement of the connecting member (38).

22. Screen wiping apparatus according to Claim 20 or Claim 21, characterised in that the second working surface (94) cooperates with the inclined ramp (128, 130), with a second elastic loading member (142) being interposed.

23. Screen wiping apparatus according to Claim 22, characterised in that the second elastic loading member is a helical compression spring (142), a first end (144) of which bears in the base of a blind bore (138) of the connecting member (38), which extends at right angles to the direction (A) of displacement of the latter, and the free end of the compression spring (142) cooperates with the inclined ramp (128, 130).

24. Screen wiping apparatus according to Claim 23, characterised in that a piston (136), coaxial with the helical compression spring (142), is mounted for sliding movement in the longitudinal said bore (138) of the connecting member (38), and in that the head (134) of the piston (136) cooperates with the inclined ramp (128, 130).

25. Screen wiping apparatus according to any one of the preceding Claims, characterised in that the value of the elastic loading force is adjustable.

26. Screen wiping apparatus according to any one of the preceding Claims, characterised in that the said device (36) applies to the wiper arm (12) a complementary torque in such a way that it is capable of increasing or reducing the value of the wiping torque, in particular as a function of at least one operating parameter of the vehicle.

## Patentansprüche

1. Scheibenwischeranlage (10), insbesondere für Kraftfahrzeuge, bestehend aus einem Scheibenwischerarm (12), der Wenigstens ein Wischblatt trägt und der gelenkig um eine Gelenkachse (X-X) an einem Antriebskopf (20) für den Scheibenwischerarm (12) angebracht ist, sowie aus Mitteln (24, 36), die zwischen dem Antriebskopf (20) und dem Scheibenwischerarm (12) angeordnet sind, um auf letzteren ein Wischmoment anzuwenden, und die wenigstens eine Feder (26), die auf den Scheibenwischerarm (12) ein in etwa konstantes Nennwischmoment anwendet, sowie eine Vorrichtung zur Anwendung eines Ergänzungsmoments umfassen, die aus einem Stellglied (36) besteht, dessen Körper (42) zum Antriebskopf (20) gehört und dessen Ausgangsorgan (40) mit dem Scheibenwischerarm (12) über ein Verbindungsstück (38) verbunden ist, das eine Wirkfläche (74) aufweist, wobei die besagte Wirkfläche (74) mit einem Organ (44) zur Übertragung des Ergänzungsmoments zusammenwirkt, das mit dem Scheibenwischerarm (12) verbunden ist, **dadurch gekennzeichnet,** daß sich das Organ (44) im Verhältnis zum Scheibenwischerarm entgegen einer elastischen Einstellkraft (58) bewegen kann, um auf kontrollierte Weise den Wert der Wischkraft des Scheibenwischers (10) in Abhängigkeit von einem Betriebsparameter des Fahrzeugs zu verändern und die zyklischen Beanspruchungen zu dämpfen, wenn zyklische Belastungen auf das Organ (44) ein Moment ausüben, das größer als das der elastischen Einstellkraft (58) entsprechende Moment ist.

2. Scheibenwischeranlage nach Anspruch 1, **dadurch gekennzeichnet,** daß das Organ (44) zur Übertragung des Ergänzungsmoments schwenkbar am Scheibenwischerarm (12) um eine Schwenkachse (U-U) gelagert ist, die parallel zur Gelenkachse (X-X) verläuft, und daß es ein elastisches Einstellorgan (58) umfaßt, das das Organ (44) zur Übertragung des Ergänzungsmoments drehend um seine Schwenkachse (U-U) beansprucht.

3. Scheibenwischeranlage nach Anspruch 2, **dadurch gekennzeichnet,** daß das Organ (44) zur Momentübertragung einen Schenkel (50) zur Momentanwendung umfaßt, der sich in einer Richtung erstreckt, die in etwa senkrecht zur Schwenkachse (U-U) verläuft, und dessen freies Ende (72) mit der Wirkfläche (74) des Verbindungsstücks (38) zusammenwirkt.

4. Scheibenwischeranlage nach Anspruch 3, **dadurch gekennzeichnet,** daß sich das Verbindungsstück (38) in einer Richtung (A) bewegt, die senkrecht zur Gelenkachse (X-X) verläuft, und daß die Wirkfläche (74) eine ebene Teilfläche ist, die senkrecht zur Bewegungsrichtung (A) angeordnet ist.

5. Scheibenwischeranlage nach Anspruch 4, **dadurch gekennzeichnet,** daß das freie Ende (72) des Schenkels (50) zur Momentanwendung eine Rolle (76) umfaßt, die drehbar um eine parallel zur Gelenkachse (X-X) angeordnete Drehachse (V-V) gelagert ist.

6. Scheibenwischeranlage nach einem der Ansprüche 4 oder 5, **dadurch gekennzeichnet,** daß das elastische Einstellorgan (58) eine Schraubendruckfeder ist, deren erstes Ende den Schenkel (50) zur Momentanwendung beaufschlagt und deren zweites Ende (64) mit einer im Scheibenwischerarm (12) ausgebildeten Auflagefläche zusammenwirkt.

7. Scheibenwischeranlage nach Anspruch 6, **dadurch** **gekennzeichnet,** daß die Schraubenfeder in einem Längsblindloch (56) des Schenkels (50) zur Momentanwendung eingebaut ist.

8. Scheibenwischeranlage nach Anspruch 7, **dadurch gekennzeichnet,** daß ein mit der Schraubenfeder (58) koaxialer Kolben verschiebbar im Längsloch (56) des Schenkels (50) zur Momentanwendung gelagert ist, wobei der Boden (122) des Kolbens mit der besagten Auflagefläche zusammenwirkt.

9. Scheibenwischeranlage nach Anspruch 6, **dadurch gekennzeichnet,** daß der Schenkel (50) zur Momentanwendung einen Arm (150) umfaßt, der mit einem seiner Enden (125) am Schenkel zur Momentanwendung um eine Schwenkachse (S-S) angelenkt ist, die parallel zur Schwenkachse (U-U) des Organs (44) zur Momentübertragung verläuft, und daß der Arm (150) die Schraubendruckfeder (58) trägt.

10. Scheibenwischeranlage nach Anspruch 9 , **dadurch gekennzeichnet,** daß der Arm (150) eine Stange (154) ist, die durch die Schraubenfeder (58) hindurchgeht und an der verschiebbar ein Kolben (156) gelagert ist, dessen Boden (160) durch das zweite Ende der Feder (58) beaufschlagt wird und mit der besagten Auflagefläche mittels eines Kugelgelenks (160, 162) zusammenwirkt.

11. Scheibenwischeranlage nach einem der Ansprüche 6 bis 10 , **dadurch gekennzeichnet**, daß das elastische Einstellorgan (58) das Organ (44) zur Momentübertragung im Anschlag an eine im Scheibenwischerarm (12) ausgebildete Auflagefläche (66) elastisch beaufschlagt.

12. Scheibenwischeranlage nach Anspruch 11 , **dadurch gekennzeichnet,** daß die Auflagefläche (66) aus der Innenfläche des Rückens (14) eines Teilstücks des Scheibenwischerarms (12) besteht, das einen U-förmigen Querschnitt aufweist.

13. Scheibenwischeranlage nach Anspruch 8 , **dadurch gekennzeichnet**, daß der Boden (122) des Kolbens eine Rolle (124) umfaßt, die drehbar um eine Dehachse (W-W) gelagert ist, die senkrecht zur Gleitachse des Kolbens verläuft.

14. Scheibenwischeranlage nach einem der vorangehenden Ansprüche, **dadurch gekennzeichnet**, daß das Verbindungsstück (38) eine zweite Wirkfläche (94) umfaßt, die mit dem Organ (44) zur Momentübertragung Zusammenwirkt, um auf den Scheibenwischerarm (12) ein Ergänzungsmoment in entgegengesetzter Richtung zu dem Moment anzuwenden, das aus dem Zusammenwirken der ersten Wirkfläche (74) mit dem Organ (44) zur Momentübertragung resultiert.

15. Scheibenwischeranlage nach Anspruch 14 in Kombination mit einem der Ansprüche 3 bis 13 , **dadurch gekennzeichnet**, daß das Organ (44) zur Momentübertragung einen zweiten Schenkel (52) zur Momentanwendung umfaßt, der sich in einer Richtung erstreckt, die in etwa senkrecht zur Schwenkachse (U-U) verläuft, und dessen freies Ende (96) mit der zweiten Wirkfläche (94) des Verbindungsstücks (38) zusammenwirkt.

16. Scheibenwischeranlage nach Anspruch 15 , **dadurch gekennzeichnet,** daß die beiden Schenkel (50, 52) zur Momentanwendung parallel verlaufen und sich beiderseits der Schwenkachse (U-U) in einer Richtung erstrecken, die in etwa senkrecht zur Bewegungsrichtung (A) des Verbindungsstücks (38) verläuft.

17. Scheibenwischeranlage nach einem der Ansprüche 14 bis 16 , **dadurch gekennzeichnet,** daß die zweite Wirkfläche (94) aus einer Schräge besteht.

18. Scheibenwischeranlage nach Anspruch 17 , **dadurch gekennzeichnet,** daß die Schräge (94) entgegen einer elastischen Einstellkraft um eine Achse (S-S) verschwenkt werden kann, die parallel zur Gelenkachse (X-X) und senkrecht zur Steigungslinie der Schräge verläuft.

19. Scheibenwischeranlage nach Anspruch 18 , **dadurch gekennzeichnet,** daß die Schräge (94) aus einem (98) der Schenkel (98, 102) einer haarnadelförmigen Blattfeder (100) besteht, deren anderer Schenkel (102) an einer Auflagefläche (112) des Verbindungsstücks (38) zur Anlage kommt und durch deren Biegung (106) ein Stift (108) hindurchgeht.

20. Scheibenwischeranlage nach Anspruch 15 , **dadurch gekennzeichnet,** daß der zweite Schenkel (52) zur Momentanwendung eine Schräge (128, 130) umfaßt, die mit der besagten zweiten Wirkfläche (94) zusammenwirkt.

21. Scheibenwischeranlage nach Anspruch 20 in Kombination mit einem der Ansprüche 4 bis 14 , **dadurch gekennzeichnet,** daß die Steigungslinie der besagten Schräge parallel zur Bewegungsrichtung (A) des Verbindungsstücks (38) verläuft.

22. Scheibenwischeranlage nach einem der Ansprüche 20 oder 21 , **dadurch gekennzeichnet**, daß die zweite Wirkfläche (94) mit der Schräge (128, 130) unter Einfügung eines zweiten elastischen Einstellorgans (142) zusammenwirkt.

23. Scheibenwischeranlage nach Anspruch 22 , **dadurch gekennzeichnet,** daß das zweite elastische Einstellorgan eine Schraubendruckfeder (142) ist, deren erstes Ende (144) am Boden einer Blindbohrung (138) des Verbindungsstücks (38) zur Anlage kommt, die sich senkrecht zur Bewegungsrichtung (A) des Verbindungsstücks erstreckt, und deren freies Ende mit der Schräge (128, 130) zusammenwirkt.

24. Scheibenwischeranlage nach Anspruch 23 , **dadurch gekennzeichnet,** daß ein mit der Schraubenfeder (142) koaxialer Kolben (136) verschiebbar in der besagten Blindbohrung (138) gelagert ist, wobei der Boden (134) des Kolbens (136) mit der Schräge (128, 130) zusammenwirkt.

25. Scheibenwischeranlage nach einem der vorangehenden Ansprüche, **dadurch gekennzeichnet**, daß der elastische Einstellwert verstellbar ist.

26. Scheibenwischeranlage nach einem der vorangehenden Ansprüche, **dadurch gekennzeichnet**, daß die besagte Vorrichtung (36) auf den Scheibenwischerarm (12) ein Ergänzungsmoment anwendet, so daß der Wert des Wischmoments insbesondere in Abhängigkeit von wenigstens einem Betriebsparameter des Fahrzeugs erhöht oder verringert werden kann.
